Europäisches Patentamt

European Patent Office

Office européen des brevets

(19)

(11) Veröffentlichungsnummer: **0 192 993**
**B1**

(12) # EUROPÄISCHE PATENTSCHRIFT

(45) Veröffentlichungstag der Patentschrift:
14.03.90

(51) Int. Cl.⁴: **G01B 11/24**

(21) Anmeldenummer: **86101274.8**

(22) Anmeldetag: **31.01.86**

(54) **Verfahren und Anordnung zur dreidimensionalen optischen Erfassung von Objekten.**

(30) Priorität: **31.01.85 DE 3503231**

(43) Veröffentlichungstag der Anmeldung:
**03.09.86 Patentblatt 86/36**

(45) Bekanntmachung des Hinweises auf die Patenterteilung:
**14.03.90 Patentblatt 90/11**

(84) Benannte Vertragsstaaten:
**AT BE CH DE FR GB IT LI LU NL SE**

(56) Entgegenhaltungen:
**DE-A- 1 623 151**
**DE-A- 2 701 858**
**FR-A- 2 175 344**
**GB-A- 2 088 552**
**GB-A- 2 142 427**
**US-A- 4 174 524**
**US-A- 4 264 208**

(73) Patentinhaber: **Kappner, Helmut A., Akazienweg 13, D-6720 Speyer/Rhein(DE)**

(72) Erfinder: **Kappner, Helmut A., Akazienweg 13, D-6720 Speyer/Rhein(DE)**

(74) Vertreter: **Patentanwälte Zellentin & Partner, Zweibrückenstrasse 15, D-8000 München 2(DE)**

**Beschreibung**

Die Erfindung betrifft ein Verfahren und eine Anordnung zur dreidimensionalen Erfassung von Objekten mittels intensitätsmoduliertem Licht, einem Sensor und einer Auswerteeinrichtung.

Es sind Verfahren bekannt, die aus stereoskopischen Aufnahmen mit Hilfe von zwei stereoskopisch angeordneten Fernsehkameras und einem Bildverarbeitungssystem die Höheninformation gewinnen.

Ferner ist ein Verfahren bekannt, das aus den Szenenhelligkeiten bei unterschiedlichen Gleichlichtbeleuchtungen in einem komplizierten Rechenverfahren Aussagen über die Höheninformation zuläßt. Diese Verfahren sind sehr rechenintensiv und konnten den Beweis für ihre Eignung im industriellen Einsatz bisher nicht erbringen.

Aus der DE-A-16 23 151 ist ferner ein Verfahren und eine Vorrichtung zum Messen und Regeln von Profilstücken bekannt, womit die Höhendifferenzen zwischen zwei Flächen des zu untersuchenden Objekts bestimmt werden können. Zu diesem Zweck werden zwei von einer Lichtquelle ausgehende parallelphasenmodulierte Lichtstrahlen, die von den unterschiedlichen Flächen des Objekts reflektiert werden, über zwei entsprechende Detektoren aufgefangen und über elektronische Schaltungen die Phasenverschiebung zwischen den beiden Videosignalen gemessen. Eine dreidimensionale Erfassung von Objekten ist mit dieser Anordnung nicht möglich.

Aus der US-P 4 174 524 ist ein Verfahren und eine Vorrichtung zur Abbildung von Objekten durch diffuse Medien hindurch bekannt, wonach pulsiertes Laserlicht auf das Objekt geleitet und von diesem auf den Sensor reflektiert wird, wobei eine vor dem Sensor angebrachte Blende so mit dem Lichtgenerator gekoppelt ist, daß sie geschlossen ist, während das Streulicht aus dem diffusen Medium auftrifft und erst öffnet, wenn das vom Objekt reflektierte Licht auf den Sensor auftrifft. Diese Vorrichtung erfaßt keine dreidimensionalen Bilder, sondern bildet das Objekt entsprechend der optischen Anordnung zweidimensional auf der Detektorebene ab.

Schließlich ist ein Verfahren bekannt, bei dem eine modulierte Laserlichtquelle mittels einer zweiachsigen Mechanik nacheinander auf jeden Punkt der Szene gerichtet wird und mittels Phasenvergleich zwischen abgehender und reflektierter Welle die Phase als Abstandsinformation ausgewertet wird.

Dieses Verfahren ist durch die erforderliche Mechanik aufwendig und störanfällig und leidet unter der erforderlichen hohen Aufnahmezeit für ein komplettes Bild.

Die Erfindung, wie sie in den Ansprüchen gekennzeichnet ist, ist dagegen nicht mit beweglicher Mechanik behaftet, nimmt dreidimensionale Bilder in weniger als 100 ms auf und erzeugt für digitale Bildverarbeitungsrechner geeignete dreidimensionale Bilder, die ohne erheblichen Bildverarbeitungsaufwand wie bei dem anfangs genannten Verfahren Objektvermessungen und Objekterkennungen z. B. im industriellen Einsatz erlauben.

Die Erfindung gemäß der Ansprüche 1 und 11 hat den Vorteil, daß keine sehr schnell arbeitenden Lichtmodulatoren im Strahlengang des Sensors benötigt werden. Es ist jedoch ein Sensor mit einer nichtlinearen Kennlinie erforderlich.

Die Weiterbildung der Erfindung gemäß Anspruch 3 ermöglicht es, durch eine weitere Aufnahme des Objekts möglicherweise vorhandene unterschiedliche Grauwerte der einzelnen Punkte des Objekts als Referenzwerte zu benutzen und zur Ermittlung der Abstandsinformation zu verwerten.

Durch die Weiterbildung der Erfindung gemäß Anspruch 4 werden etwaige unbeabsichtigte Änderungen der Intensität des von der Lichtquelle ausgestrahlten Lichts bei der Ermittlung der Meßwerte berücksichtigt.

Durch die in den weiteren abhängigen Ansprüchen aufgeführten Maßnahmen sind weitere vorteilhafte Weiterbildungen und Verbesserungen der in unabhängigen Ansprüchen angegebenen Erfindung möglich.

Die Videokamera kann dabei mit einem zweidimensionalen Sensor ausgerüstet sein, so daß - wie üblich - zweidimensionale Bilder des Objekts mit Hilfe der Kamera aufgenommen werden. Es kann jedoch eine Videokamera mit einem eindimensionalen Sensor verwendet werden, wobei dann eine flächenhafte Abtastung des Objekts dadurch ermöglicht wird, daß entweder das Objekt unter der Videokamera und der Lichtquelle bewegt wird, oder daß die Videokamera und die Lichtquelle entsprechende Bewegungen ausführen.

Zur Unterdrückung des Fremdlichteinflusses kann gemäß einer Weiterbildung ein schmalbandiges optisches Filter vor der Kamera vorgesehen sein.

Zur Erhöhung der Lichtempfindlichkeit kann die Videokamera auch mit einem Bildverstärker versehen sein.

Ausführungsbeispiele der Erfindung sind in der Zeichnung an Hand mehrerer Figuren dargestellt und in der nachfolgenden Beschreibung näher erläutert. Es zeigt:

Fig. 1 eine erste Anordnung zur Durchführung des erfindungsgemäßen Verfahrens,
Fig. 2 eine zweite Anordnung zur Durchführung des erfindungsgemäßen Verfahrens und
Fig. 3 und Fig. 4 Diagramme zur Erläuterung der Anordnung nach Fig. 2.

Gleiche Teile sind in den Figuren mit gleichen Bezugszeichen versehen.

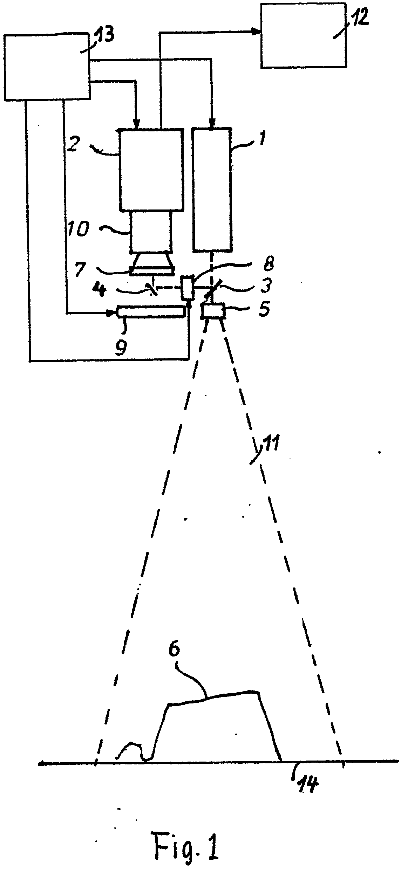

Bei der in Fig. 1 dargestellten Anordnung ist ein intensitätsmodulierbarer Laser 1 auf ein Objekt 6 gerichtet. Zur Ausleuchtung einer das Objekt 6 umschließenden Fläche ist vor dem Laser 1 eine Strahlaufweitungsoptik 5 vorgesehen, welche den Strahlungskegel 11 erzeugt.

Neben dem Laser 1 ist eine Videokamera 2 angeordnet, welche in an sich bekannter Weise einen opto-elektronischen Sensor (Fernsehaufnahmeröhre, Halbleitersensor) und ein Objektiv 7 enthält. Die Videokamera 2 ist ebenfalls auf das Objekt gerichtet. Dabei kann ihre optische Achse parallel zu derjenigen des Lasers liegen, wenn die zu erfassenden Objekte wesentlich größer als der Abstand der optischen Achsen sind. Für kleinere Objekte sind die optischen Achsen entsprechend divergierend anzuordnen.

Im Strahlengang des Lasers ist ein erster teildurchlässiger Spiegel 3 angeordnet, welcher einen Teil des Laserlichts senkrecht in Richtung auf einen zweiten teildurchlässigen Spiegel 4 umlenkt, welcher sich im Strahlengang der Videokamera 2 befindet. Der optische Weg des umgelenkten Teil des Laserlichts ist derart ausgelegt, daß die Sensorfläche der Videokamera gleichmäßig mit Laserlicht ausgeleuchtet wird.

Zwischen den teildurchlässigen Spiegeln 3 und 4 ist eine steuerbare Blende 8 angeordnet. Im Strahlengang Videokamera zwischen dem teildurchlässigen Spiegel gel 4 und dem Objekt ist eine weitere steuerbare Blende 9 vorgesehen. Die von der Videokamera erzeugten Signale werden einer Auswerte-Einrichtung 12 zugeführt. Zur Steuerung des zeitlichen Ablaufs des mit der dargestellten Anordnung durchgeführten Verfahrens ist eine Steuereinrichtung 13 vorgesehen. Die Videokamera 2 kann mit einem Bildverstärker 10 versehen sein, damit auch bei geringen Beleuchtungsstärken eine Erfassung von Objekten möglich ist.

Das mit der Anordnung nach Fig. 1 durchgeführte Verfahren beruht auf der Interferenz kohärenter Wellenzüge, allerdings wird hierbei nicht eine Übereinstimmung in der "Grundwelle", deren Länge im Submikrometerbereich liegt, sondern die Interferenz einer Intensitätsmodulationswelle ausgenutzt.

Die intensitätsmodulierte Lichtstrahlung wird mit Hilfe eines teildurchlässigen Spiegels 3 in zwei Teile zerlegt, die bei der späteren Zusammenführung als kohärent bezüglich der Modulationswellenlänge erscheinen.

Dagegen ist Kohärenz auf der Ebene der Licht-"Grundwelle" bei dem erfindungsgemäßen Verfahren nicht erforderlich. Es kann daher auch eine andere Lichtquelle als ein Laser benutzt werden, sofern ihr Licht entsprechend modulierbar ist.

Die optische Erfassung des Objekts geschieht dabei in der Weise, daß ein Kegel intensitätsmodulierten Lichtes das zu erfassende Objekt beleuchtet.

Ein Teil der Strahlung wird über die teildurchlässigen Spiegel 3 und 4 auf den Sensor der Videokamera 2 geworfen, und zwar dergestalt, daß der Sensor auf allen Punkten seiner Oberfläche gleichmäßig bestrahlt wird.

Empfängt nun die Videokamera 2 zusätzlich die remittierte Strahlung des Objekts, so interferieren die über die Strahlumlenkung eingeblendeten ("direkten") mit den von dem Objekt reflektierten ("indirekten") Strahlungsanteilen des Lichtes auf der Sensoroberfläche.

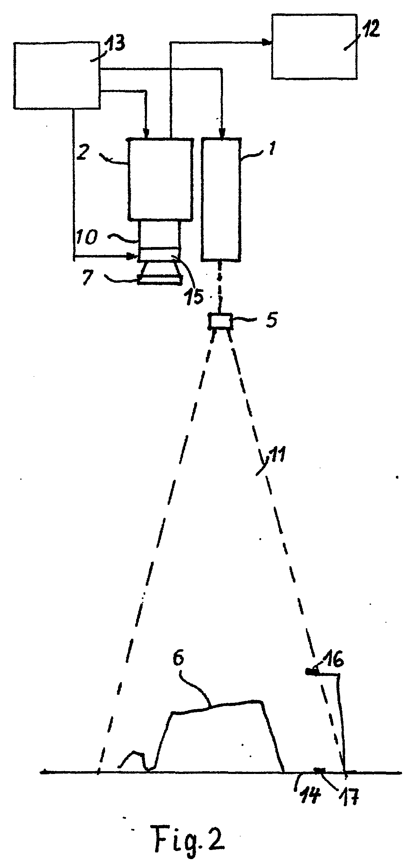

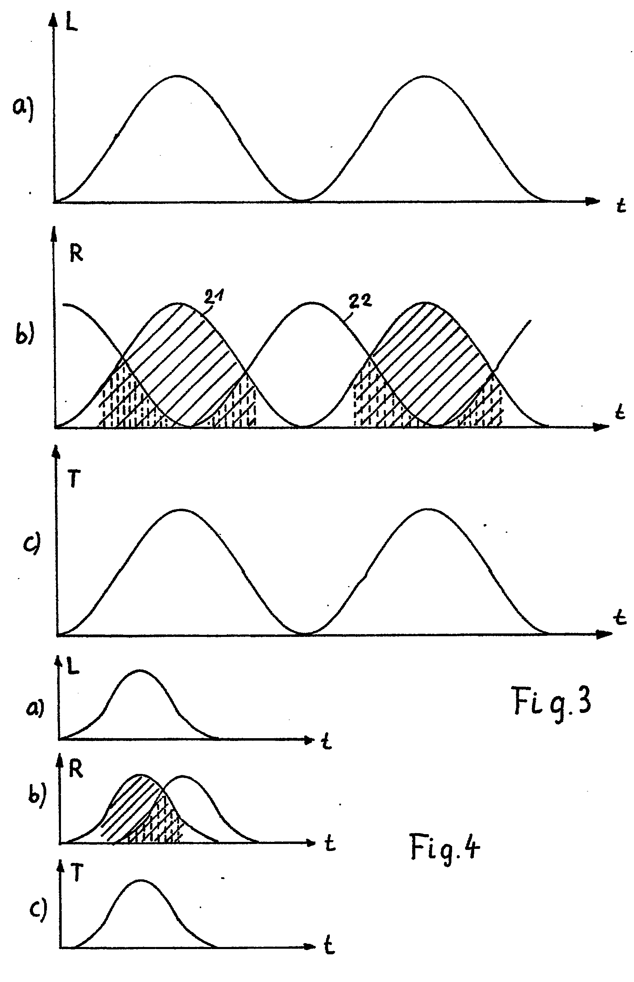

Bei der in Fig. 2 dargestellten Anordnung beleuchtet das intensitätsmodulierte Licht das Objekt 6, ohne daß - wie bei der Anordnung nach Fig. 1 - ein Teil des Lichts zur Videokamera 2 geleitet wird. Die Videokamera 2 ist mit einem optischen Modulator 15 versehen, welcher synchron zur Modulation des Lasers angesteuert wird. In Fig. 3a) ist der zeitliche Verlauf der Intensität L des Laserlichts dargestellt, während in Fig. 3c) der zeitliche Verlauf der Durchlässigkeit T des optischen Modulators 15 (Fig. 2) gezeigt ist.

Die in Fig. 3b) dargestellten Kurven stellen die Intensität R des von einem Punkt des Objekts remittierten Lichts dar - und zwar die Kurve 21 für den Fall eines Punktes in unmittelbarer Nähe des Lasers bzw. der Videokamera und die Kurve 22 für einen Punkt auf der das Objekt 6 (Fig. 2) tragenden Grundfläche.

Da die Kurve 21 in Phase mit der Durchlaßzeit des optischen Modulators ist, gelangt von dem Licht mit der geringen Laufzeit ein großer Anteil zum Sensor. Dieser Anteil wird durch die schrägschraffierte Fläche dargestellt. Die Kurve 22, welche den Verlauf des von der Grundfläche remitierten Lichts darstellt, hat gerade dann Minima, wenn der optische Modulator am weitesten geöffnet ist. Es gelangt somit nur ein kleiner Anteil des Lichts zum Sensor, wie es durch die senkrechte gestrichelte Schraffur angedeutet ist.

Die Laufzeitunterschiede erzeugen also in Abhängigkeit des Abstandes des jeweiligen Objektdetails auf dem Sonsor eine dem Objektdetail zugeordnete Beleuchtungsstärke.

Vorzugsweise wird die Modulationsfrequenz so gewählt, daß die Modulationswellenlänge mindestens der vierfachen maximalen Höhendifferenz des Objekts, die maximale Laufzeit also einer halben Wellenlänge entspricht.

Vorteilhafterweise wird die Beleuchtungs/Sensor-einheit dann in einem Abstand, der größer als $\lambda/4$ ist, von der das Objekt 6 tragenden Grundfläche 14 installiert, so daß die Grundfläche 14 ein Strahlungsminimum auf dem Sensor hervorruft und die Strahlungsstärke des Sensors mit wachsender Höhe zunimmt. Aus praktischen Gründen wird man jedoch den Abstand zwischen Beleuchtungs/Sensor-Einheit und Grundfläche deutlich größer als die Höhe der zu erfassenden Objekte wählen. Eine Verschiebung des zu erfassenden Höhenbereichs kann auch dadurch erfolgen, daß die Ansteuerung des optischen Modulators gegenüber der Ansteuerung des Laser-Modulators phasenverschoben wird.

Bei Höhendifferenzen üblicher industrieller Objekte im Fertigungsprozeß von einigen Dezimetern sind Modulationswellenlängen von ca. 0,1 bis 5 Meter erforderlich. Das entspricht Modulationsfrequenzen von 3 GHz bis 60 MHz. Eine derart schnelle Modulation erreicht man beispielsweise mit Halbleiter-Lasern oder speziellen Lichtmodulatoren, wie beispielsweise Pockelszellen, Kerrzellen, elektro-optischen und akusto-optischen Modulatoren.

Bei den vorangegangenen Betrachtungen wurde unterstellt, daß sämtliche beleuchteten und von der Videokamera aufgenommenen Flächen des Objekts 6 - von der Videokamera 2 aus gesehen - gleich hell erscheinen. Ferner wurde die quadratische Abnahme der Beleuchtungsstärke mit der Entfernung vernachlässigt. Unter dieser Voraussetzung ergibt die von dem optischen Modulator wie beschrieben durchgelassene Lichtmenge ein Maß für die Höhe der einzelnen Punkte des Objekts 6.

Industrielle Objekte zeigen jedoch gemeinhin unterschiedliche Remissionskoeffizienten im Bereich $\rho = 0,2 \ldots 0,9$. Da unterschiedliche Remissionseigenschaften die gemessenen Werte stark beeinflussen, und außerdem die remittierte Strahlung dem Gesetz der quadratischen Abhängigkeit von der Entfernung zwischen Lichtquelle und Objekt unterliegt, wird zusätzlich zur oben beschriebenen Aufnahme eines "Meßbildes" die Aufnahme eines "Referenzbildes" durchgeführt, in welche die Remissionseigenschaften des Objekts und die quadratische Abhängigkeit der Beleuchtungsstärke des Objekts für jeden Bildpunkt eingehen.

Hierzu wird der optische Modulator 15 auf eine konstante Durchlässigkeit eingestellt und das Objekt als Grauwertbild aufgenommen, wobei das Grauwertbild im nachgeordneten Bildverarbeitungssystem 12 digitalisiert und als erstes Referenzbild abgespeichert wird.

In einem ersten Bildverarbeitungsschritt werden die digitalen Grauwerte jedes Bildpunktes des Referenzbildes von denjenigen des Meßbildes subtrahiert (woraus auch negative Rechenergebnisse resultieren können).

Die erhaltene Zahl für jeden Bildpunkt ist ein Maß für die Höhe des Objekts an der dem Bildpunkt entsprechenden Stelle. Bereits eliminiert sind damit sowohl die Abhängigkeit der Bildpunktgrauwerte von den Remissionseigenschaften des Objekts, als auch die Abhängigkeit der Bestrahlungsstärke vom Quadrat der Entfernung.

Der resultierende Digitalwert $D_x$ für jeden Bildpunkt ist ein Maß der Höhe $H_x$ de entsprechenden Objektdetails $x$.

Vorteilhafterweise werden z. B. am Rande des Bildfeldes in der das Objekt umfassenden Szene zwei kleine Referenzflächen 16, 17 (Fig. 2) angebracht, die das minimale ($H_{min}$) und maximale ($H_{max}$) Höhenniveau markieren und als Referenzflächen für die absolute Höhenbestimmung dienen.

Die Videokamera 2 kann auch anstelle des zweidimensionalen Sensors einen Einzeilensensor umfassen, wobei die Aufweitungsoptik 5 des Lasers 1 entsprechend gestaltet sein kann. Zur Abtastung einer Fläche kann dann entweder die dargestellte Anordnung geschwenkt bzw. verfahren werden oder Objekt 6 beispielsweise auf einem Fließband unter der Anordnung bewegt werden.

Die Referenzwerte für die Grauwerte des Objekts 6 können anstelle der beschriebenen bildweisen Eermittlung bei Verwendung eines Zeilensensors auch zeilenweise ermittelt werden.

Wegen der geringen Steigung der annähernd harmonischen Funktion der Modulation im Bereich $\varphi = 0°$ und $\varphi = 180°$ kann es vorteilhaft sein, die Modulationsfrequenz, die geometrischen Verhältnisse und die Phasenlage zwischen der Modulation des Lasers und des von dem Objekt zum Sensor geführten Lichts derart zu wählen, daß diejenigen Teile der Funktion ausgewertet werden, welche eine geringe Krümmung aufweisen. Bei reduzierten Anforderungen kann dann die trigonometrische Rechnung bzw. der Einsatz einer gespeicherten Umrechnungstabelle (look-up table) sogar entfallen, da angenähert lineare Abhängigkeit vorliegt.

Zur Minimierung von Fremdlichteinflüssen kann ein schmalbandiges, steilflankiges optisches Bandpaßfilter vor der Kamera-Optik angebracht sein, das nur in einem schmalen Spektralbereich durchlässig ist. Wird hierfür ein Spektralbereich gewählt, der im sonstigen Umgebungslicht nicht vorkommt und der möglichst im Strahlungsmaximum der Lichtquelle liegt, so kann der Einfluß von Fremdlicht weitgehend reduziert werden. Eine Bildverstärkerröhre wird zur Erhöhung der Empfindlichkeit der Videokamera vorgeschaltet.

Bei kleineren Objektentfernungen sind die Strahlwege zwischen Laser, Glasscheibe, Reflektorfläche und Sensor nicht zu vernachlässigen und rechnerisch zu berücksichtigen. Bei kleinsten Objektentfernungen ist auch der seitliche Versatz der Laserlichtquelle gegen die Kamera trigonometrisch zu kompensieren.

Anstelle der periodischen Modulation, wie sie im Zusammenhang mit Fig. 3 erläutert wurde, kann auch ein Pulslaser verwendet werden, welcher den in Fig. 4a) dargestellten Lichtimpuls aussendet. Der optische Modulator 15 wird dann entsprechend kurzzeitig lichtdurchlässig, wie es in Fig. 4c) gezeigt ist. Je nach Laufzeit fällt ein größerer oder kleinerer Teil des zurückkehrenden Lichtimpulses in die Öffnungszeit des optischen Modulators (Fig. 4b)). Als optischer Modulator eignet sich hierfür außer einer Bragg-Zelle ein elektronen-optischer Bildverstärker, welchem kurzzeitig Hochspannung zugeführt wird. Insbesondere eignet sich ein Nahfokus-Bildverstärker. Gegebenenfalls kann ein derartiger Kurzzeitverschluß auch mit dem Bildverstärker 10 vereinigt sein.

**Patentansprüche**

1. Verfahren zur dreidimensionalen optischen Erfassung von Objekten mit den folgenden Merkmalen:

   a) das Objekt wird mit periodisch oder pulsförmig intensitätsmodulierendem Licht beleuchtet und auf eine Sensorebene zweidimensional abgebildet,

   b) der Sensor gibt ein der Helligkeit entsprechendes Signal an eine Auswerte-Einrichtung ab,

   c) in der Auswerte-Einrichtung werden die Helligkeitswerte in geometrische Höhen- oder Abstandswerte des jeweiligen Punktes des Objektes vom Sensor umgerechnet, wobei

   d) der Sensor eine nicht-lineare Kennlinie besitzt und

   e) ein Teil des intensitätsmodulierten Lichts über Spiegel dem Sensor direkt zugeleitet wird.

2. Verfahren zur dreidimensionalen optischen Erfassung von Objekten mit den folgenden Merkmalen:

   a) das Objekt wird mit periodisch oder pulsförmig intensitätsmodulierendem Licht beleuchtet und auf eine Sensorebene zweidimensional abgebildet,

   b) der Sensor gibt ein der Helligkeit entsprechendes Signal an eine Auswerte-Einrichtung ab,

   c) in der Auswerte-Einrichtung werden die Helligkeitswerte in geometrische Höhen- oder Abstandswerte des jeweiligen Punktes des Objektes vom Sensor umgerechnet,

d) der Sensor besitzt eine lineare Kennlinie,

e) das vom Objekt zum Sensor geleitete Licht wird synchron zur Intensitätsmodulation moduliert.

3. Verfahren nach Anspruch 1 oder 2, dadurch gekennzeichnet, daß ferner das Objekt auf dem Sensor abgebildet wird, während ein Teil des intensitätsmodulierten Lichts nicht zum Sensor geleitet wird, und daß die somit gewonnenen Signale als Referenzwerte gespeichert werden.

4. Verfahren nach Anspruch 3, dadurch gekennzeichnet, daß ferner ein Teil des intensitätsmodulierten Lichts dem Sensor zugeleitet wird, während das Objekt nicht auf dem Sensor abgebildet wird, und daß die somit gewonnenen Signale als weitere Referenzwerte gespeichert werden.

5. Verfahren nach Anspruch 1 oder 2, dadurch gekennzeichnet, daß Signale dadurch abgeleitet werden, daß die Modulation des vom Objekt zum Sensor geleiteten Lichts unterbleibt und die vom Sensor erzeugten Signale als Referenzwerte gespeichert werden.

6. Verfahren nach Anspruch 1 oder 2, dadurch gekennzeichnet, daß das Objekt mit einem Lichtimpuls beleuchtet wird und daß der Strahlengang zwischen dem Objekt und dem Sensor im wesentlichen gleichzeitig mit dem Lichtimpuls freigegeben wird und daß danach ein auf dem Sensor entstandenes Ladungsbild abgetastet wird.

7. Verfahren nach Anspruch 6, dadurch gekennzeichnet, daß die Dauer des Lichtimpulses im Nanosekunden-Bereich liegt.

8. Verfahren nach einem der Ansprüche 1 bis 5, dadurch gekennzeichnet, daß die Intensitätsmodulation mit einem periodischen Signal erfolgt und daß das vom Objekt zum Sensor geleitete Licht mit gleicher Frequenz und im wesentlichen gleicher Phase moduliert wird.

9. Verfahren nach Anspruch 8, dadurch gekennzeichnet, daß die Frequenz der Intensitätsmodulation im Bereich von 100 MHz liegt.

10. Verfahren nach einem der Ansprüche 3 bis 9, dadurch gekennzeichnet, daß in einer Auswerte-Einrichtung die Referenzwerte für jeden Bildpunkt von den Helligkeitswerten subtrahiert werden und daß die resultierenden Werte einer Korrekturrechnung unterzogen werden, welche eine Funktion zwischen Helligkeitswert und Abstand berücksichtigt.

11. Anordnung zur Durchführung des Verfahrens nach einem der Ansprüche 1 und 3 bis 10 mit einer optischen Anordnung mit

a) einer einen Sensor mit nicht-linearer Kennlinie und ein Objektiv (7) zur zweidimensionalen Abbildung eines Objektes (6) umfassenden Videokamera (2) und einer intensitätsmodulierbaren Lichtquelle (1), die derart auf eine Objektebene (14) gerichtet sind, daß die optischen Achsen der Videokamera (2) und der Lichtquelle (1) colinear oder fast colinear sind,

b) je einem im Strahlengang zwischen der Objektebene (14) und der Videokamera (2) und im Strahlengang zwischen der Objektebene (14) und der Lichtquelle (1) derart angeordneten teildurchlässigen Spiegel (3, 4), daß ein Teil des intensitätsmodulierten Lichts dem Sensor als Referenzstrahl und ein anderer Teil der Objektebene (14) zur Beleuchtung des Objektes zuführbar sind,

c) einer zwischen den teildurchlässigen Spiegeln (3, 4) angeordneten ersten steuerbaren Blende (8) und

d) einer zwischen dem zweiten teildurchlässigen Spiegel (4) und der Objektebene (14) angeordneten zweiten steuerbaren Blende (9), und mit einem der Videokamera (2) nachgeordnetem Bildverarbeitungssystem (12), welches die Helligkeitswerte der jeweiligen Objektpunkte in geometrische Höhen- oder Abstandswerte umrechnen kann.

12. Anordnung zur Durchführung des Verfahrens nach einem der Ansprüche 2 bis 10 mit einer optischen Anordnung mit

a) einer einen Sensor mit linearer Kennlinie und ein Objektiv (7) zur zweidimensionalen Abbildung eines Objektes (6) umfassenden Videokamera (2) und einer intensitätsmodulierbaren Lichtquelle (1) zur Beleuchtung des Objektes (6), die derart auf eine Objektebene (14) gerichtet sind, daß die optischen Achsen der Videokamera (2) und der Lichtquelle (1) colinear oder fast colinear sind, und

b) einem zwischen dem Sensor und der Objektebene (14) angeordneten optischen Modulator (15) und mit einem der Videokamera (2) nachgeordnetem Bildverarbeitungssystem (12), welches die Helligkeitswerte der jeweiligen Objektpunkte in geometrischen Höhen- oder Abstandswerte umrechnen kann.

13. Anordnung nach einem der Ansprüche 11 oder 12, dadurch gekennzeichnet, daß der Sensor einen Zeilensensor enthält und eine Vorrichtung zur zweidimensionalen Abtastung des Objektes (6) eine Relativbewegung zwischen der optischen Anordnung und dem Objekt (6) erzeugen kann.

14. Anordnung nach einem der Ansprüche 11 bis 13, dadurch gekennzeichnet, daß vor der Videokamera (2) ein schmalbandiges optisches Filter angeordnet ist.

15. Anordnung nach einem der Ansprüche 11 bis 13, dadurch gekennzeichnet, daß die Lichtquelle (1) ein Laser ist und daß im Strahlengang des Lasers eine Strahlaufweitungsoptik (5) vorgesehen ist, die den Laserstrahl zweidimensional aufweitet.

16. Anordnung nach einem der Ansprüche 11 oder 12, dadurch gekennzeichnet, daß die Videokamera (2) mit einem elektronen-optischen Bildverstärker (10) versehen ist.

17. Anordnung nach Anspruch 12, dadurch gekennzeichnet, daß der optische Modulator (15) ein akusto-optischer Modulator (Bragg-Zelle) ist.

18. Anordnung nach Anspruch 12, dadurch gekennzeichnet, daß der optische Modulator (15) ein elektronen-optischer Bildverstärker ist.

19. Anordnung nach einem der Ansprüche 12 und 17–18, dadurch gekennzeichnet, daß ein weiterer akusto-optischer Modulator zur Intensitätsmodulation des Lichts vorgesehen ist.

20. Anordnung nach einem der Ansprüche 11–19, dadurch gekennzeichnet, daß im Bereich des Objekts Höhenreferenzflächen vorgesehen sind.

## Claims

1. Process for the three-dimensional optical recognition of objects with the following characteristics:
a) the object is illuminated with periodic or pulsed, intensity-modulated light and imaged two-dimensionally on a sensor plane,
b) the sensor gives a signal corresponding to the brightness to an evaluation device,
c) in the evaluation device, the brightness values are converted into geometric height or distance values of the particular point of the object from the sensor, whereby
d) the sensor possesses a non-linear characteristic and
e) a part of the intensity-modulated light is passed via mirrors directly to the sensor.

2. Process for the three-dimensional optical recognition of objects with the following characteristics:
a) the object is illuminated with periodic or pulsed, intensity-modulated light and imaged two-dimensionally on a sensor plane,
b) the sensor gives a signal corresponding to the brightness to an evaluation device,
c) in the evaluation device, the brightness values are converted into geometric height or distance values of the particular point of the object from the sensor,
d) the sensor possesses a linear characteristic and
e) the light passed from the object to the sensor is modulated synchronously to the intensity modulation.

3. Process according to claim 1 or 2, characterised in that, furthermore, the object is imaged on the sensor, whereas a part of the intensity-modulated light is not passed to the sensor, and that the signals so obtained are stored as reference values.

4. Process according to claim 3, characterised in that, furthermore, a part of the intensity-modulated light is passed to the sensor, whereas the object is not imaged on the sensor and that the signals so obtained are stored as further reference values.

5. Process according to claim 1 or 2, characterised in that signals are thereby led off that the modulation of the light passed from the object to the sensor does not take place and the signals produced by the sensor are stored as reference values.

6. Process according to claim 1 or 2, characterised in that the object is illuminated with a light impulse and that the beam path between the object and the sensor is cleared substantially simultaneously with the light impulse and that thereafter a charge image resulting on the sensor is scanned.

7. Process according to claim 6, characterised in that the period of the light impulse lies in the nanosecond range.

8. Process according to one of claims 1 to 5, characterised in that the intensity modulation takes place with a periodic signal and that the light passed from the object to the sensor is modulated with the same frequency and in substantially the same phase.

9. Process according to claim 8, characterised in that the frequency of the intensity modulation lies in the region of 100 MHz.

10. Process according to one of claims 3 to 9, characterised in that, in an evaluation device, the reference values for each image point are subtracted from the brightness values and that the resulting values are subjected to a correction calculation which takes into account a function between brightness value and distance.

11. Arrangement for the carrying out of the process according to one of claims 1 and 3 to 10 with an optical arrangement with
a) a video camera (2), comprising a sensor with non-linear characteristic and a lens (7) for the two-dimensional imaging of an object (6), and an intensity-modulatable light source (1) which is directed in such a manner on an object plane (14) that the optical axes of the video camera (2) and of the light source (1) are co-linear or almost co-linear,
b) in each beam path (3) between the object plane (14) and the video camera (2) and in the beam path between the object plane (14) and the light source (1), partly transparent mirrors (3, 4) are arranged in such a manner that a part of the intensitymodulated light can be passed to the sensor as reference beam and another part to the object plane (14) for the illumination of the object,
c) a first controllable aperture (8) arranged between the partly transparent mirrors (3, 4) and
d) a second controllable aperture (9) arranged between the second partly permeable mirror (4) and the object plane (14) and with an image processing system (12) arranged after the video camera (2) which can process the brightness values of the particular object points into geometric height and distance values.

12. Arrangement for the carrying out of the process according to one of claims 2 to 10 with an optical arrangement with
a) a video camera (2) comprising a sensor with linear characteristic and a lens (7) and an intensity-modulatable light source (1) for the illumination of the object (6) which are directed on an object plane (14) in such a manner that the optical axes of the video camera (2) and of the light source (1) are co-linear or almost co-linear, and
b) an optical modulator (15) arranged between the sensor and the object plane (14) and with an image processing system (12) arranged after the video camera (2) which can process the brightness values of the particular object points into geometric height and distance values.

13. Arrangement according to one of claims 11 or 12, characterised in that the sensor contains a line sensor and a device for the two-dimensional scanning of the object (6) can produce a relative movement between the optical arrangement and the object (6).

14. Arrangement according to one of claims 11 to 13, characterised in that a narrow-band optical filter is arranged in front of the video camera (2).

15. Arrangement according to one of claims 11 to 13, characterised in that the light source (1) is a laser and that in the beam path of the laser is provided a beam widening optic (5) which widens the laser beam two-dimensionally.

16. Arrangement according to one of claims 11 or 12, characterised in that the video camera (2) is provided with an electron-optical image amplifier (10).

17. Arrangement according to claim 12, characterised in that the optical modulator (15) is an acusto-optical modulator (Bragg cell).

18. Arrangement according to claim 12, characterised in that the optical modulator (15) is an electron-optical image amplifier.

19. Arrangement according to one of claims 12 and 17 - 18, characterised in that a further acusto-optical modulator is provided for the intensity modulation of the light.

20. Arrangement according to one of claims 11 - 19, characterised in that height reference surfaces are provided in the region of the object.

## Revendications

1. Procédé de saisie optique en trois dimensions d'objets, présentant les caractéristiques suivantes:
   a) l'objet est éclairé avec une lumière modulée en intensité, périodiquement ou sous forme d'impulsions, et il est représenté en deux dimensions sur un plan de détecteur,
   b) le détecteur délivre un signal correspondant à la luminosité à un dispositif d'évaluation,
   c) les valeurs de luminosité sont converties dans le dispositif d'évaluation en des valeurs géométriques de hauteur ou de distance entre chaque point de l'objet et le détecteur,
   d) le détecteur a une courbe de fonctionnement non linéaire, et
   e) une partie de la lumière modulée en intensité est directement amenée au détecteur par un miroir.

2. Procédé de saisie optique en trois dimensions d'objets, présentant les caractéristiques suivantes:
   a) l'objet est éclairé avec une lumière modulée en intensité, périodiquement ou sous forme d'impulsions, et il est représenté en deux dimensions sur un plan de détecteur,
   b) le détecteur délivre un signal correspondant à la luminosité à un dispositif d'évaluation,
   c) les valeurs de luminosité sont converties dans le dispositif d'évaluation en des valeurs géométriques de hauteur ou de distance entre chaque point de l'objet et le détecteur,
   d) le détecteur présente une courbe de fonctionnement linéaire,
   e) la lumière amenée de l'objet au détecteur est modulée en synchronisme avec la modulation d'intensité.

3. Procédé suivant l'une ou l'autre des revendications 1 et 2, caractérisé en ce que l'objet est en outre représenté sur le détecteur pendant qu'une partie de la lumière modulée en intensité n'est pas amenée au détecteur et en ce que les signaux ainsi obtenus sont stockés comme valeurs de référence.

4. Procédé suivant la revendication 3, caractérisé en ce qu'une partie de la lumière modulée en intensité est en outre amenée au détecteur pendant que l'objet n'est pas représenté sur le détecteur et en ce que les signaux ainsi obtenus sont stockés comme valeurs supplémentaires de référence.

5. Procédé suivant l'une ou l'autre des revendications 1 et 2, caractérisé en ce que les signaux sont dérivés par le fait que la modulation de la lumière amenée de l'objet au détecteur cesse et que les signaux produits par le détecteur sont stockés comme valeurs de référence.

6. Procédé suivant l'une ou l'autre des revendications 1 et 2, caractérisé en ce que l'objet est éclairé par une impulsion de lumière et en ce que le trajet des rayons entre l'objet et le détecteur est libéré sensiblement en même temps que l'impulsion de lumière et en ce qu'ensuite est détectée une image de charge formée sur le détecteur.

7. Procédé suivant la revendication 6, caractérisé en ce que la durée de l'impulsion de lumière est de l'ordre des monosecondes.

8. Procédé suivant l'une quelconque des revendications 1 à 5, caractérisé en ce que la modulation d'intensité est effectuée avec un signal périodique et en ce que la lumière amenée de l'objet au détecteur est modulée avec la même fréquence et sensiblement la même phase.

9. Procédé suivant la revendication 8, caractérisé en ce que la fréquence de la modulation d'intensité est de l'ordre de 100 MHz.

10. Procédé suivant l'une quelconque des revendications 3 à 9, caractérisé en ce que, dans un dispositif d'évaluation, les valeurs de référence sont soustraites des valeurs de luminosité pour chaque point d'image et en ce que les valeurs résultantes sont soumises à un calcul de correction qui tient compte d'une fonction entre valeur de luminosité et distance.

11. Dispositif pour la mise en œuvre du procédé suivant l'une quelconque des revendications 1 et 3 à 10, comprenant un appareillage optique comportant:
   a) une caméra vidéo (2), comportant un détecteur ayant une courbe de fonctionnement non linéaire et un objectif (7) pour la représentation en deux dimensions d'un objet (6), et une source de lumière (1) pouvant être modulée en intensité, la caméra et la source de lumière étant dirigées sur un plan d'objet (14) de manière que les axes optiques de la caméra vidéo (2) et de la source de lumière (1) soient colinéaires ou presque colinéaires,
   b) des miroirs semi-transparents (3, 4) agencés dans le trajet des rayons entre le plan d'objet (14) et la caméra vidéo (2) et dans le trajet des rayons entre le plan d'objet (14) et la source de lumière (1), de façon qu'une partie de la lumière modulée en intensité puisse être amenée au détecteur comme rayon de référence et qu'une autre partie puisse être amenée au plan d'objet (14) pour l'éclairement de l'objet,
   c) un premier écran (8) qui peut être commandé et qui est disposé entre les miroirs semi-transparents (3, 4), et
   d) un second écran (9) qui peut être commandé et qui est disposé entre le second miroir semi-transparent (4) et le plan d'objet (14),
   et comprenant un système de traitement d'image (12) qui est disposé à la suite de la caméra vidéo (2) et qui peut convertir les valeurs de luminosité de chaque point de l'objet en des valeurs géométriques de hauteur et de distance.

12. Dispositif pour la mise en œuvre du procédé suivant l'une quelconque des revendications 2 à 10, comprenant un appareillage optique comportant:

a) une caméra vidéo (2), comportant un détecteur ayant une courbe de fonctionnement linéaire et un objectif (7) pour la représentation en deux dimensions d'un objet (6), et une source de lumière (1), pouvant être modulée en intensité et destinée à l'éclairage de l'objet (6), la caméra et la source de lumière étant dirigées sur un plan d'objet (14) de manière que les axes optiques de la caméra vidéo (2) et de la source de lumière (1) soient colinéaires ou presque colinéaires, et

b) un modulateur optique (15) agencé entre le détecteur et le plan d'objet (14),

et comprenant un système de traitement d'image (12) qui est disposé à la suite de la caméra vidéo (2) et qui peut convertir les valeurs de luminosité de chaque point d'objet en des valeurs géométriques de hauteur et de distance.

13. Dispositif suivant l'une ou l'autre des revendications 11 et 12, caractérisé en ce que le détecteur contient un détecteur de ligne et en ce qu'un dispositif de détection de l'objet (6) dans deux dimensions peut produire un déplacement relatif entre l'appareillage optique et l'objet (6).

14. Dispositif suivant l'une quelconque des revendications 11 à 13, caractérisé en ce qu'un filtre optique à bande étroite est disposé devant la caméra vidéo (2).

15. Dispositif suivant l'une quelconque des revendications 11 à 13, caractérisé en ce que la source de lumière (1) est un laser et en ce qu'il est prévu dans le trajet des rayons du laser une optique d'élargissement de rayon (5) qui élargit le rayon laser dans deux dimensions.

16. Dispositif suivant l'une ou l'autre des revendications 11 et 12, caractérisé en ce que la caméra vidéo (2) et pourvue d'un amplificateur d'image (10) électrono-optique.

17. Dispositif suivant la revendication 12, caractérisé en ce que le modulateur optique (15) est un modulateur acousto-optique (cellule de Bragg).

18. Dispositif suivant la revendication 12, caractérisé en ce que le modulateur optique (15) est un amplificateur d'image électrono-optique.

19. Dispositif suivant l'une quelconque des revendications 12, 17 et 18, caractérisé en ce qu'un modulateur acousto-optique supplémentaire est prévu pour la modulation d'intensité de la lumière.

20. Dispositif suivant l'une quelconque des revendications 11 à 19, caractérisé en ce que des surfaces de référence de hauteur sont prévues à proximité de l'objet.

Fig. 1

Fig. 2

Fig.3

Fig.4